# EUROPÄISCHE PATENTSCHRIFT

(11) **EP 0 812 745 B1**
(45) Veröffentlichungstag und Bekanntmachung des Hinweises auf die Patenterteilung: **01.08.2001**
(21) Anmeldenummer: 97107606.2
(22) Anmeldetag: 09.05.1997
(51) Int. Cl.: B60T 1/087

(54) **Retarder**
Retarder
Ralentisseur

(30) Priorität: 14.06.1996 DE 19623680
(43) Veröffentlichungstag der Anmeldung: 17.12.1997
(73) Patentinhaber: Voith Turbo GmbH & Co. KG, 89522 Heidenheim (DE)
(72) Erfinder: Friedrich, Jürgen, 74564 Crailsheim (DE); Adams, Werner, 74564 Crailsheim (DE); Vogelsang, Klaus, 74564 Crailsheim (DE)
(74) Vertreter: Dr. Weitzel & Partner

(56) Entgegenhaltungen:
- DE-A- 1 946 167
- DE-A- 2 203 319
- DE-A- 4 440 165
- FR-A- 2 230 236
- US-A- 3 367 461

## Beschreibung

Die Erfindung betrifft einen Retarder, der Bestandteil einer Antriebsgruppe ist, insbesondere für Fahrzeuge und insbesondere in Verbindung mit einem Verbrennungsmotor und einem Getriebe. Eine Antriebseinheit mit einem Retarder und einem Getriebe ist aus DE 44 40 165 A1bekanntgeworden - Dokument (1).

Hydrodynamische Retarder kommen wegen ihrer besonderen Eigenschaften in letzter Zeit immer mehr zur Anwendung. Sie arbeiten verschleiß- und ermüdungsfrei, so daß sie auch Fahrzeuge mit großen Massen bei längeren Gefällstrecken zuverlässig abbremsen können.

Die Hersteller von Fahrzeugen verlangen eine möglichst kompakte Bauweise der Einzelaggregate von Antriebs-Baugruppen. Außerdem ist es wünschenswert, die einzelnen Aggregate leichter und schneller ein- und ausbauen zu können, und zwar sowohl für die Zwecke der Erstmontage als auch bei Wartungsarbeiten. Dies betrifft insbesondere den Retarder.

DE 19 46 167 A zeigt einen Retarder, der ständig angetrieben wird und einem Abschnitt des Kühlkreislaufes des Motors eines Personenfahrzeuges parallel geschaltet ist. Mit Hilfe eines 3-Wege-Ventils kann der Retarder mit dem Kühlwasser beaufschlagt oder von diesem abgetrennt werden. Dadurch, daß der Retarder mit einer verhältnismäßig hohen Drehzahl betrieben wird, kann ein ausreichend großes Bremsmoment schon mit einem relativ kleinen Retarder erreicht werden, dessen geringer Platzbedarf es ermöglicht, ihn insbesondere an einem Ende der Kurbelwelle einzubauen.

DE 38 37 142 A1 zeigt und beschreibt einen Retarder, der als geschlossene Baugruppe von außen her in ein Gehäuse eines Zahnräderwechselgetriebes einfügbar ist. Damit wird zwar eine gewisse Vereinfachung gegenüber anderen Retardern erzielt. Jedoch ist dieser vorbekannte Retarder bezüglich der Herstellung sowie bezüglich des Raumbedarfes noch nicht optimal.

Der Erfindung liegt die Aufgabe zugrunde, einen Retarder derart zu gestalten, daß dieser aus wenigen Bauteilen besteht und daß er schnell und prozeßgerecht ein- und ausbaubar ist. Diese Aufgabe wird durch die Merkmale von Anspruch 1 gelöst.

Durch die erfindungsgemäße Ausbildung des Retarders ist es möglich, dessen hydrodynamische Bauteile sowie deren Lagerung vorzufertigen und in völlig montiertem Zustand in das Retardergehäuse als Patrone einzuschieben. Es ist somit nicht mehr notwendig, den Rotor oder den Stator durch Verschrauben zu fixieren, vielmehr läßt sich eine Befestigung durch Klemmen oder Verspannen vornehmen. Eine Schraubverbindung an der Rückseite des Stators entfällt. Durch die Möglichkeit, die hydrodynamischen Bauteile des Retarders als komplette Einheit in einem Vormontage-Arbeitsgang herzustellen, lassen sich die Herstellungskosten drastisch senken.

Die Erfindung ist anhand der Zeichnung näher erläutern.

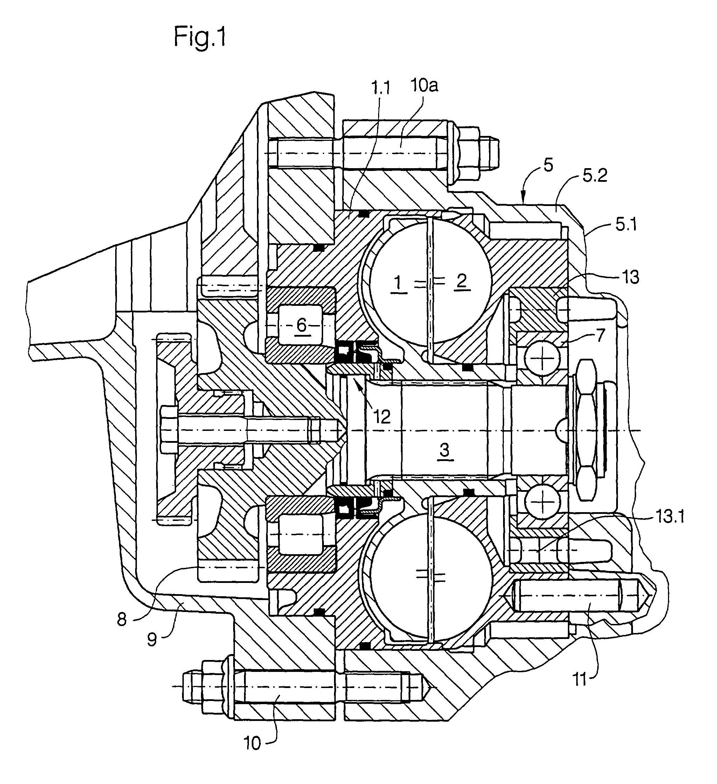

Figur 1 zeigt in schematischer Darstellung einen Retarder mit einem Rotorschaufelrad 1 und einem Statorschaufelrad 2, die miteinander einen torusförmigen Arbeitsraum bilden. Der Rotor ist auf der Retarderwelle 3 aufgekeilt. Er ist von einem Rotorgehäuse 1.1 umschlossen. Man erkennt ferner das Retardergehäuse 5, das Rotor 1 und Stator 2 aufgenommen hat. Wie man sieht, ist es topfförmig ausgebildet, mit einem Topfboden 5.1 und einer zylindrischen Umfangswand 5.2.

Die Retarderwelle 3 ist am Rotorgehäuse 1.1 und am Stator 2 gelagert, und zwar durch Radiallager 6 bzw. 7. Lager 7 ist gleichzeitig ein Axiallager.

Die Rotorwelle 3 trägt ein Zahnrad 8, das eine Schrägverzahnung aufweist, mit dem ein Drehmoment vom Getriebe her in den Retarder eingeleitet wird.

Man erkennt ferner einen Teil des Getriebegehäuses 9, und zwar ein Getriebe-Endgehäuse.

Mehrere Schrauben 10, die konzentrisch zur Retarderwelle 3 angeordnet sind, sind durch entsprechende Bohrungen im Getriebe-Endgehäuse 9 hindurchgeführt und in Gewindebohrungen des Retardergehäuses 5 eingeschraubt. Eine Schraube 10a ist aus Platzgründen von der Retarderseite her in das Getriebe-Endgehäuse 9 eingeschraubt.

Die Montage geht wie folgt vor sich:

Rotor 1 mit Rotorgehäuse 1.1, Stator 2, Retarderwelle 3, die beiden Lager 6, 7 mit dem aufgekeilten Zahnrad 8 werden miteinander montiert. Sodann wird diese Einheit in die topfförmige Aussparung 5.1, 5.2 des Retardergehäuses 5 eingesetzt. Sodann werden Retardergehäuse mit der darin befindlichen Einheit mit dem Getriebe-Endgehäuse 9 entlang der Ebene A-A zusammengefügt und mittels der Schrauben 10 bzw. 10a verschraubt. Damit ist der Retarder an Ort und Stelle montiert und einsatzbereit.

Das Lager 6 wird vom Öl im Getriebe geschmiert, während das Lager 7 vom Retarder-Arbeitsöl geschmiert wird. Beide Öle sind voneinander verschieden. Deswegen sind im Bereich des Lagers 6 Dichteinheiten 12 angeordnet.

Lager 7 ist von einem Ring 13 umschlossen. Dieser dient zum einen als Lagerstützring. Zum anderen weist er Öffnungen 13.1 zum Befüllen des Retarders mit Arbeitsöl auf.

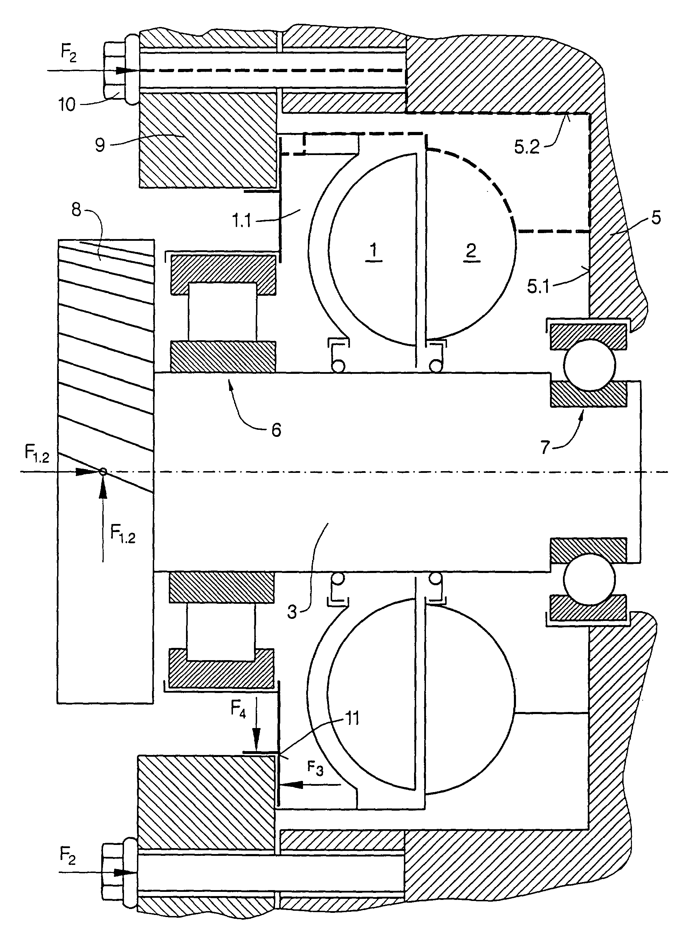

Figur 2 ist eine noch stärker schematisierte Darstellung eines Retarders. Hieraus erkennt man den Kraftfluß, der sich nach dem Einsetzen und Festklemmen der hydrodynamischen Bauteile des Retarders in die topfförmige Aussparung 5.1, 5.2 ergibt.

## Patentansprüche

1. Retarder
1.1 mit einem Stator (2);
1.2 mit einem Rotor (1), der auf einer Retarderwelle (3) sitzt und von einem Rotorgehäuse (1.1) umfaßt ist;
1.3 mit einem Retardergehäuse (5), das Rotor (1) und Stator (2) aufnimmt, und das zum Anbau an ein Getriebegehäuse (9) bestimmt ist;
gekennzeichnet durch die folgenden Merkmale:
1.4 das Retardergehäuse (5) weist eine topfförmige Aussparung (5.1, 5.2) auf, die entsprechend den Außenkonturen von Rotor (1), Gehäuse (1.1) und Stator (2) gestaltet ist, so daß es eine vormontierte Baugruppe aus Rotorgehäuse (1.1), mit Rotor (1) und Stator (2) aufzunehmen vermag und eine Einheit bildet.

2. Retarder nach Anspruch 1, gekennzeichnet durch die folgenden Merkmale:
2.1 es sind Spannschrauben (10) vorgesehen, die in das Retardergehäuse (5) einschraubbar sind;
2.2 das Retardergehäuse (5) ist in eingesetztem Zustand in der Aussparung (5.1, 5.2) festzuspannen.

3. Retarder nach Anspruch 1 oder 2, dadurch gekennzeichnet, daß die feststehenden Bauteile der vormontierten Einheit aus Rotorgehäuse (1.1) und Stator (2) ausschließlich durch Klemmen in der topfförmigen Aussparung (5.1, 5.2) gehalten ist.

4. Retarder nach einem der Ansprüche 1 bis 3, dadurch gekennzeichnet, daß die Retarderwelle (3) am Rotorgehäuse (1.1) und am Stator (2) gelagert ist.

5. Retarder nach einem der Ansprüche 1, 2 und 4, dadurch gekennzeichnet, daß das Retardergehäuse (5.1) und das Statorschaufelrad (2) durch wenigstens einen Axialstift (11) miteinander verbunden sind.

6. Retarder nach einem der Ansprüche 1 bis 5, dadurch gekennzeichnet, daß die topfförmige Aussparung (5.1, 5.2) derart bemessen und gestaltet ist, daß es hydrodynamische Teile unterschiedlicher Größe aufnehmen kann.

## Claims

1. Retarder
1.1 with a stator (2);
1.2 with a rotor (1) which is seated on a retarder shaft (3) and encased by a rotor housing (1.1);
1.3 with a retarder housing (5) which accommodates rotor (1) and stator (2) and which is intended for mounting onto a gear housing (9)
**characterised** by the following features:
1.4 the retarder housing (5) comprises a trough shaped cutout (5.1, 5.2) designed to correspond with the outside contours of rotor (1), housing (1.1) and stator (2) so that it is capable of accommodating a pre-assembled assembly group of rotor housing (1.1), with rotor (1) and stator (2), thus forming one unit.

2. Retarder according to Claim 1, **characterised** by the following features:
2.1 clamping bolts (10) are provided which are screwed into the retarder housing (5);
2.2 the retarder housing (5) is to be clamped in its inserted state into the cutout (5.1, 5.2).

3. Retarder according to Claim 1 or 2, **characterised in that** the fixed assembly components of the pre-assembled unit of rotor housing (1.1) and stator (2) are held exclusively by clamps in the trough shaped cutout (5.1, 5.2).

4. Retarder according to one of Claims 1 to 3, **characterised in that** the retarder shaft (3) is mounted on rotor housing (1.1) and stator (2).

5. Retarder according to one of Claims 1, 2 and 4, **characterised in that** the retarder housing (5.1) and the stator impeller (2) are joined together by at least one axial pin (11).

6. Retarder according to one of Claims 1 to 5, **characterised in that** the troughshaped cutout (5.1, 5.2) is dimensioned and designed in such a manner that it can accommodate hydrodynamic parts of different sizes.

## Revendications

1. Ralentisseur
1.1 avec un stator (2) ;
1.2 avec un rotor (1) qui est placé sur un arbre de ralentisseur (3) et qui est entouré par un carter de rotor (1.1);
1.3 avec un carter de ralentisseur (5) qui reçoit le rotor (1) et le stator (2) et qui est destiné à être monté sur un carter de boîte de vitesses (9) ;
caractérisé par les éléments distinctifs suivants :
1.4 le carter de ralentisseur (5) présente un évidement en forme de pot (5.1, 5.2) qui est configuré selon les contours extérieurs du rotor (1), du carter (1.1) et du stator (2) de façon à permettre de recevoir un sous-ensemble pré-monté constitué du carter de rotor (1.1) avec rotor (1) et stator (2)en formant une unité.

2. Ralentisseur selon la revendication 1, caractérisé par les éléments distinctifs suivants :
2.1 il est prévu des vis de serrage (10) qui peuvent se visser dans le carter de ralentisseur (5) ;
2.2 à l'état enfoncé, le carter de ralentisseur (5) est à immobiliser par serrage dans l'évidement (5.1,5.2).

3. Ralentisseur selon la revendication 1 ou 2, caractérisé en ce que les éléments fixes de l'unité pré-montée constituée du carter de rotor (1.1) et du stator (2) sont maintenus uniquement par serrage dans l'évidement en forme de pot (5.1,5.2).

4. Ralentisseur selon l'une des revendications 1 à 3, caractérisé en ce que l'arbre de ralentisseur (3) est logé dans le carter de rotor (1.1) et dans le stator (2).

5. Ralentisseur selon l'une des revendications 1, 2 et 4, caractérisé en ce que le carter de ralentisseur (5.1) et la roue à aubes du stator (2) sont raccordés l'un à l'autre par au moins une cheville axiale(11).

6. Ralentisseur selon l'une des revendications 1 à 5, caractérisé en ce que l'évidement en forme de pot (5.1,5.2) est dimensionné et configuré de façon à ce qu'il puisse recevoir des éléments hydrodynamiques de différentes tailles.
